# EUROPEAN PATENT APPLICATION

(11) **EP 4 552 736 A1**
(43) Date of publication of application: **14.05.2025**
(21) Application number: 23835355.1
(22) Date of filing: 26.06.2023
(51) Int. Cl.: B01J 23/63, B01D 53/94, B01J 37/34, C01F 17/32, B01J 23/10

(54) **EXHAUST-GAS-PURIFYING OXIDATION CATALYST, AND METHOD FOR OXIDIZING EXHAUST GAS USING SAME**

(30) Priority: 07.07.2022 JP 2022109527
(71) Applicant: Umicore Shokubai Japan Co., Ltd., Tokoname-shi Aichi 479-0882 (JP)
(72) Inventor: KOITO, Yusuke, Kobe-shi, Hyogo 650-0047 (JP); NAKANO, Fumiya, Kobe-shi, Hyogo 650-0047 (JP)
(74) Representative: Lischka, Kerstin
(86) International application number: PCT/JP2023/023556
(87) International publication number: WO 2024/009821

(57) **Abstract**

The invention provides a catalyst capable of effectively oxidizing an exhaust gas (particularly NO). The invention relates to an oxidation catalyst for exhaust gas purification including a catalyst layer containing platinum, palladium, and a cerium-aluminum composite oxide or a cerium-aluminum composite oxide and an aluminum oxide, formed on a three-dimensional structure, in which the cerium-aluminum composite oxide contains CeₓAl_{y}O_{z} (where x > y, x + y = 1, and 1.95 ≤ z ≤ 2.05).

## Description

### Technical Field

The present invention relates to an oxidation catalyst for exhaust gas purification and an exhaust gas oxidation method using the same.

### Background Art

Many techniques have been proposed for purifying an exhaust gas generated from an internal combustion engine in the related art. For example, regarding the purification of the exhaust gas from a diesel engine, various techniques have been proposed for the purpose of reducing particulate matter (PM) and nitrogen oxides (NOx) contained in the exhaust gas.

For example, JP2002-211908A (corresponding to US2002/0090512A1) discloses a catalyst in which precious metal, containing at least platinum, is supported on a composite oxide in which a cerium oxide and an oxide of at least one metal selected from Al, Ti, and Si which are not solid-soluble with the cerium oxide, are dispersed in a nm scale. The catalyst of JP2002-211908A (corresponding to US2002/0090512A1) described above is disclosed to have excellent durability.

### Summary of the Invention

However, since the catalyst of JP2002-211908A (corresponding to US2002/0090512A1) is a three-way catalyst, that catalyst is effective in reducing NOx. However, sufficient oxidation performance (particularly NO oxidation performance) cannot be exhibited for the exhaust gas from a diesel engine.

Therefore, this invention has been made in consideration of the circumstances described above, and an object thereof is to provide a catalyst capable of effectively oxidizing an exhaust gas.

The inventors have conducted intensive research to solve the problems described above, and as a result have found that the problems described above can be solved by using a specific cerium-aluminum composite oxide, thereby achieving the invention.

That is, the object described above is implemented by an oxidation catalyst for exhaust gas purification in which a catalyst layer containing platinum, palladium, a cerium-aluminum composite oxide or an aluminum oxide and a cerium-aluminum composite oxide is formed on a three-dimensional structure, and the cerium-aluminum composite oxide contains CeₓAl_{y}O_{z} (where x > y, x + y = 1, and 1.95 ≤ z ≤ 2.05).

The invention relates to an oxidation catalyst for exhaust gas purification including a catalyst layer containing platinum, palladium, and a cerium-aluminum composite oxide or a cerium-aluminum composite oxide and an aluminum oxide, formed on a three-dimensional structure, and the cerium-aluminum composite oxide contains CeₓAl_{y}O_{z} (where x > y, x + y = 1, and 1.95 ≤ z ≤ 2.05). The catalyst of the invention can effectively oxidize exhaust gas.

A urea SCR system is known to purify exhaust gas from a diesel engine. In a urea SCR system, it is important to supply NO₂ in the amount required for a fast SCR reaction (4NH₃ + 2NO + 2NO₂ → 4N₂ + 6H₂O) to a SCR catalyst. As a method for supplying NO₂, a method of oxidizing NO by an oxidation catalyst disposed in an exhaust path on the engine side relative to the SCR catalyst is known. However, under operating conditions in which the temperature of the exhaust gas is low, it is difficult to efficiently promote an oxidation reaction from NO to NO₂, which is an important technical problem. To solve the technical problem described above, as a result of study, it can be found that a catalyst having the configuration described above can exhibit excellent exhaust gas oxidation performance (particularly NO oxidation performance; the same applies hereinafter). The mechanism by which the effect described above is achieved is unclear, but is speculated to be as follows. The invention is not limited by the following speculation. In CeₓAl_{y}O_{z} (where x > y, x + y = 1, and 1.95 ≤ z ≤ 2.05), lattice defects are likely to be selectively generated in order to complement the charge balance at the interface between ceria and alumina. It is considered that the supply of excess oxygen from the lattice defect sites promotes the NO oxidation.

In the present description, the "oxidation catalyst for exhaust gas purification" is also simply referred to as a "catalyst according to the present invention" or a "catalyst". "CeₓAl_{y}O_{z} (where x > y, x + y = 1, and 1.95 ≤ z ≤ 2.05)" is also simply referred to as "CeₓAl_{y}O_{z} according to the present invention" or "CeₓAl_{y}O_{z}". In the present description, a "cerium-aluminum composite oxide containing CeₓAl_{y}O_{z} (where x > y, x + y = 1, and 1.95 ≤ z ≤ 2.05)" is also simply referred to as a "cerium-aluminum composite oxide according to the present invention" or a "cerium-aluminum composite oxide". In the present description, a "catalyst layer containing platinum, palladium, a cerium-aluminum composite oxide or an aluminum oxide and a cerium-aluminum composite oxide" is simply referred to as a "catalyst layer according to the present invention" or a "catalyst layer".

In the present description, "X and/or Y" means that at least one of X and Y is included and includes "X alone", "Y alone", and "a combination of X and Y". In the present description, "X to Y" indicating a range includes X and Y and means "X or more and Y or less".

Preferred embodiments of the invention will be described below. The invention is not limited only to the following embodiments, and various modifications can be made within the scope of the claims. The embodiments described in the present description can be combined freely to form other embodiments.

Throughout the entire description, any singular expression should be understood as encompassing the concept thereof in the plural form, unless specifically noted otherwise. Therefore, singular articles (for example, "a", "an", "the" and the like in the case of English) should also be understood as encompassing the concept thereof in the plural form, unless specifically noted otherwise. Further, the terms used in the present description should be understood as being used in the meaning that is commonly used in the field, unless specifically noted otherwise. Therefore, unless defined otherwise, all terminologies and scientific technical terms that are used in the present description have the same meaning as the terms commonly understood by those skilled in the art to which the invention pertains. In case of a contradiction, the present description (including the definitions) takes precedence.

### <Oxidation Catalyst for Exhaust Gas Purification>

The oxidation catalyst for exhaust gas purification according to the present invention can efficiently oxidize CO, HC, and NO (particularly NO) in the exhaust gas. Therefore, the catalyst according to the present invention can be used in combination with the SCR catalyst to oxidize the exhaust gas (particularly NO) discharged from a diesel engine. That is, in a preferred form of the invention, the catalyst according to the present invention is a catalyst for oxidizing the exhaust gas discharged from a diesel engine. The invention also provides a use of the catalyst according to the present invention for oxidizing the exhaust gas discharged from a diesel engine. In a more preferred form of the invention, the catalyst according to the present invention is a catalyst for oxidizing NO in the exhaust gas discharged from a diesel engine. The invention also provides a use of the catalyst according to the present invention for oxidizing NO in the exhaust gas discharged from a diesel engine.

Hereinafter, each component of the catalyst according to the present invention will be described in order.

### [Cerium-Aluminum Composite Oxide]

The catalyst layer according to the present invention essentially contains a cerium-aluminum composite oxide of CeₓAl_{y}O_{z} (where x > y, x + y = 1, and 1.95 ≤ z ≤ 2.05).

In the CeₓAl_{y}O_{z}, x is larger than y (x > y), and x + y = 1. x is more than 0.5 and less than 1.00. Considering the substitution of Al into a CeO₂ crystal structure, x is preferably more than 0.80 and less than 0.99, more preferably more than 0.90 and less than 0.97, and particularly preferably 0.95. Similarly, considering the substitution of Al into the CeO₂ crystal structure, z is 1.95 or more and 2.05 or less (1.95 ≤ z ≤ 2.05). Considering the further improvement of the effects of the invention, z is preferably more than 1.95 and less than 2.05, more preferably more than 1.97 and less than 2.03, and particularly preferably 2.00.

That is, in a preferred form of the invention, in CeₓAl_{y}O_{z}, 0.80 < x < 0.99, x + y = 1, and 1.95 < z < 2.05. In a more preferred form of the invention, in CeₓAl_{y}O_{z}, 0.90 < x < 0.97, x + y = 1, and 1.97 < z < 2.03. In a particularly preferred form of the invention, CeₓAl_{y}O_{z} is Ce_{0.95}Al_{0.05}O_{2.00}.

The presence of CeₓAl_{y}O_{z} can be verified by a known method such as confirming the presence of a peak at a measurement angle (2θ) specific to CeₓAl_{y}O_{z} having a predetermined composition in X-ray diffraction (XRD). For example, when CeₓAl_{y}O_{z} is Ce_{0.95}Al_{0.05}O_{2.00}, the presence thereof can be verified by a method described in the examples. The term "peak" can be detected by analyzing an XRD pattern with analysis software for qualitative analysis or quantitative analysis used in an X-ray diffraction device. Therefore, when a peak is not detected in the analysis software, it is determined that CeₓAl_{y}O_{z} is not present. When there are two or more peaks in a specific range in the XRD pattern, the peak having the highest intensity is selected.

The amount of Ceₓ Al_{y} O_{z} in the cerium-aluminum composite oxide can be verified by using the proportion (peak intensity ratio) of the peak intensity of CeO₂ to the peak intensity of CeₓAl_{y}O_{z} observed with the XRD pattern as an index. The peak intensity ratio of CeO₂ to CeₓAl_{y}O_{z} in an X-ray diffraction pattern is less than 5.63, preferably less than 5.00, more preferably 4.21 or less, still more preferably less than 4.21, and particularly preferably 3.80 or less. In such a range, the oxidation performance of the exhaust gas can be further improved. The peak intensity ratio of CeO₂ to CeₓAl_{y}O_{z} is preferably as small as possible, is usually more than 0, may be 1.17 or more, and is preferably more than 1.24, more preferably 1.66 or more, still more preferably 1.70 or more from a viewpoint of further improving the oxidation performance of the exhaust gas. In the catalyst according to the present invention, a cerium oxide (ceria) is preferably present only in the cerium-aluminum composite oxide. That is, in addition to the cerium-aluminum composite oxide, the catalyst layer according to the present invention preferably does not substantially contain cerium oxide, and more preferably does not contain cerium oxide (the content of cerium oxide in the catalyst layer = 0 mass%). In the present description, "the catalyst layer does not substantially contain the cerium oxide" means that the content (a supported amount) of cerium oxide in the catalyst layer is less than 3 mass% and preferably less than 1 mass%.

In the present description, the peak intensity ratio of CeO₂ to CeₓAl_{y}O_{z} is obtained by obtaining the peak intensity at a measurement angle (2θ) specific to CeₓAl_{y}O_{z} having a predetermined composition in the X-ray diffraction (XRD) and the peak intensity at a measurement angle (2θ) specific to CeO₂ and dividing the peak intensity of CeO₂ by the peak intensity of CeₓAl_{y}O_{z}. For example, when CeₓAl_{y}O_{z} is Ce_{0.95}Al_{0.05}0_{2.00}, the peak intensity ratio of CeO₂ to Ce_{0.95}Al_{0.05}O_{2.00} is obtained by the method described in the examples. In the present description, the peak intensity ratio of CeO₂ to CeₓAl_{y}O_{z} in the X-ray diffraction pattern is also simply referred to as a "peak intensity ratio according to the present invention", a "peak intensity ratio of CeO₂ to CeₓAl_{y}O_{z}", or a "peak intensity ratio".

In the cerium-aluminum composite oxide according to the present invention, the cerium element and/or cerium oxide (ceria) is preferably disposed in the aluminum oxide (alumina) in a sea-island state, and it is more preferable that at least the Ce-O- structure is disposed in the aluminum oxide (alumina) in a sea-island state. In this case, CeₓAl_{y}O_{z} is formed at the boundary between alumina and ceria. This form can further improve the effects of the invention. Therefore, the cerium-aluminum composite oxide according to the present invention preferably contains more alumina than ceria. Specifically, in the cerium-aluminum composite oxide according to the present invention, the mass of ceria with respect to 100 parts by mass of the cerium-aluminum composite oxide is 1 part by mass or more and less than 50 parts by mass, preferably 2 parts by mass or more and 20 parts by mass or less, more preferably more than 2 parts by mass and less than 20 parts by mass, still more preferably 3 parts by mass or more and 10 parts by mass or less, and particularly preferably more than 3 parts by mass and less than 10 parts by mass. Such a composition further improves the exhaust gas oxidation performance.

The supported amount of the cerium-aluminum composite oxide according to the present invention is preferably 20 g to 400 g, more preferably 50 g to 300 g, and particularly preferably 80 g to 200 g per 1 L of the three-dimensional structure. When the cerium-aluminum composite oxide content per 1 L of the three-dimensional structure is 20 g or more, effects of the cerium-aluminum composite oxide can be sufficiently exhibited. Platinum or palladium can be sufficiently dispersed in the cerium-aluminum composite oxide, and a catalyst having more excellent catalytic performance can be obtained. In contrast, when the cerium-aluminum composite oxide content is 400 g or less, the contact state between platinum or palladium and the exhaust gas is good, and exhaust gas oxidation performance can be more sufficiently exhibited.

The content ratio (in terms of solid content) of the cerium-aluminum composite oxide according to the present invention in the catalyst is, for example, 20 mass% or more and less than 99.9 mass%, preferably 45 mass% or more and 99.5 mass% or less, and more preferably more than 95 mass% and less than 99.5 mass% with respect to the catalyst. With such a content ratio, the effects of the cerium-aluminum composite oxide can be sufficiently exhibited while maintaining a good contact state between platinum or palladium and the exhaust gas.

CeₓAl_{y}O_{z} according to the present invention is produced by ultrasonically treating an aqueous solution containing a cerium source and an aluminum source. That is, the invention provides a method for producing CeₓAl_{y}O_{z} (where x > y, x + y = 1, and 1.95 ≤ z ≤ 2.05) including ultrasonically treating the aqueous solution containing the cerium source and the aluminum source.

Preferably, CeₓAl_{y}O_{z} according to the present invention can be produced by adding the cerium source and the aluminum source to an acidic solution to prepare an aqueous solution 1 (aqueous solution 1 preparation step); applying ultrasonic waves to the aqueous solution 1 to prepare an aqueous solution 2 (aqueous solution 2 preparation step); adding the aqueous solution 2 to a basic solution to obtain a powder (powder preparation step); and calcining the powder (calcination step). The method described above will be described in detail below.

### (Aqueous Solution 1 Preparation Step)

In this step, the cerium source (cerium raw material) and the aluminum source (aluminum raw material) are added to the acidic solution to prepare the aqueous solution 1.

Here, examples of the cerium source (cerium raw material) include cerium acetate, cerium nitrate, cerium chloride, cerium sulfate, cerium nitrite, and cerium complex salts. The cerium raw material described above may be in the form of a hydrate. Among these, cerium chloride and cerium nitrate are preferable, and cerium chloride is more preferable. Examples of the aluminum source (aluminum raw material) include aluminum acetate, aluminum nitrate, aluminum chloride, aluminum sulfate, aluminum sulfite, and aluminum complex salts. The aluminum raw material described above may be in the form of a hydrate. Among these, aluminum chloride and aluminum nitrate are preferable, and aluminum chloride is more preferable. The mixing ratio of the cerium raw material and the aluminum raw material is preferably such a proportion that the composition of the cerium-aluminum composite oxide described above is obtained.

The acidic solution to which the cerium raw material and the aluminum raw material are added can be prepared by adding an acidic substance to a solvent. Here, examples of the acidic substance include hydrogen chloride, sulfuric acid, and nitric acid. Among these, hydrogen chloride and nitric acid are preferable, and hydrogen chloride is more preferable. Examples of the solvent include water and lower alcohols (for example, methanol, ethanol, propanol, and isopropanol). The solvent described above may be used alone or may be used by combining two or more types thereof. Among these, water is preferable. The concentration of the acidic substance in the acidic solution is, for example, 0.01 mol/L to 1 mol/L, and preferably about 0.05 mol/L to 0.5 mol/L.

The amounts of the cerium raw material and the aluminum raw material added to the acidic solution are such amounts that the total concentration of the cerium raw material and the aluminum raw material is 1 mass% to 40 mass% and more preferably 10 mass% to 30 mass%.

### (Aqueous Solution 2 Preparation Step)

In this step, ultrasonic waves are applied to the aqueous solution 1 prepared above (aqueous solution 1 preparation step) to prepare the aqueous solution 2. By ultrasonically treating the aqueous solution 1, CeₓAl_{y}O_{z} (particularly Ce_{0.95}Al_{0.05}O_{2.00}) according to the present invention is formed. It is considered that this is because Ce can enter the Al₂O₃ skeleton via the ultrasonic application. The above is a speculation, and the invention is not limited to thereto. Therefore, in the present step, when the aqueous solution 1 is not ultrasonically treated, CeₓAl_{y}O_{z} (particularly Ce_{0.95}Al_{0.05}O_{2.00}) according to the present invention is not formed in a sufficient amount.

In this step, any device including a usual ultrasonic oscillation source can be used. For example, a commercially available ultrasonic cleaner may be used. The frequency of the ultrasonic treatment is, for example, 10 kHz to 50 kHz, and preferably 30 kHz to 45 kHz. When the frequency in the ultrasonic treatment is in the range described above, Ce suitably vibrates. As a result, since Ce can easily enter the Al₂O₃ skeleton, CeₓAl_{y}O_{z} (particularly Ce_{0.95}Al_{0.05}O_{2.00}) is more effectively formed, which is preferable. The ultrasonic treatment may be continued and performed at the same frequency, or the frequency may be switched during the treatment using a frequency oscillation switching mode. The number of frequency switches may be once or multiple times. The ultrasonic treatment temperature (temperature of the aqueous solution 1) is, for example, 20°C to 60°C, and preferably 30°C to 50°C. When the ultrasonic treatment temperature is in the range described above, dispersibility of Al₂O₃ in the solvent is high. As a result, Ce can easily enter the Al₂O₃ skeleton, and CeₓAl_{y}O_{z} (particularly Ce_{0.95}Al_{0.05}O_{2.00}) is more effectively formed, which is preferable. The ultrasonic treatment time is, for example, 15 minutes to 2 hours, and preferably 20 minutes to 1 hour. The energy application condition is, for example, 30 W/cm² to 100 W/cm², and preferably 50 W/cm² to 80 W/cm². According to the conditions described above, CeₓAl_{y}O_{z} (particularly Ce_{0.95}Al_{0.05}O_{2.00}) according to the present invention is efficiently formed. The ultrasonic treatment may be performed while stirring the aqueous solution 1.

### (Powder Preparation Step)

In this step, the aqueous solution 2 prepared in the (aqueous solution 2 preparation step) described above is added to the basic solution to obtain the powder.

The basic solution can be prepared by adding a basic substance to the solvent. Examples of the basic substance include alkali metal hydroxides such as sodium hydroxide and potassium hydroxide, quaternary ammonium salts such as ammonia, tetramethylammonium hydroxide, and tetraethylammonium hydroxide, and amines such as ethylene diamine and piperazine. Among these, ammonia is preferable. Examples of the solvent include water and lower alcohols (for example, methanol, ethanol, propanol, and isopropanol). The solvent described above may be used alone or may be used by combining two or more types thereof. Among these, water is preferable. The concentration of the basic substance in the basic solution is, for example, 0.01 mol/L to 1 mol/L, and preferably about 0.05 mol/L to 0.5 mol/L.

The amount of the aqueous solution 2 added to the basic solution is an amount such that a total concentration (solid content concentration) of the cerium raw material and the aluminum raw material is 1 mass% to 30 mass%, and more preferably 5 mass% to 20 mass%.

When the aqueous solution 2 is added to the basic solution, the powder precipitates. The powder described above can be separated by a method such as centrifugation or filtration. The separated powder may be washed with water (for example, deionized water, pure water, ultrapure water, distilled water) if necessary, and a washing step may be performed only once or may be repeatedly performed multiple times.

The powder is dried if necessary. A drying condition when the powder is dried is not particularly limited. A drying temperature is, for example, 50°C to 170°C, and preferably 70°C to 150°C. A drying time is, for example, 10 hours to 100 hours, and preferably 20 hours to 60 hours. The drying may be performed in the air or may be performed in an inert gas atmosphere.

### (Calcination Step)

In this step, the powder obtained in the (powder preparation step) described above is calcined.

Here, the calcination conditions are not particularly limited. The calcination temperature is, for example, 500°C to 1000°C, and preferably 600°C to 900°C. The calcination time is, for example, 10 minutes to 3 hours, and preferably 15 minutes to 1 hour. The calcination may be performed in the air or may be performed in an inert gas atmosphere.

### [Aluminum Oxide (Alumina)]

The catalyst layer according to the present invention may contain an aluminum oxide (alumina) in addition to the cerium-aluminum composite oxide.

When the catalyst according to the present invention contains alumina, alumina is not particularly limited as long as an oxide of aluminum is contained, and examples thereof include activated alumina such as γ-, δ-, η-, and θ-alumina, lantana-containing alumina, silica-containing alumina, silica-titania-containing alumina, and silica-titania-zirconia-containing alumina. These aluminas may be used alone as only one type or may be used by combining two or more types thereof.

The BET specific surface area of the alumina is not particularly limited, is preferably 50 m²/g to 350 m²/g, and more preferably 80 m²/g to 250 m²/g from a viewpoint of supporting a catalyst component. With such a specific surface area, a sufficient amount of platinum and palladium (catalyst component) can be supported on the aluminum oxide, and the contact area between the catalyst component and the exhaust gas can be increased or a reaction product can be adsorbed. As a result, reactivity of the entire catalyst can be further improved.

The supported amount of alumina is not particularly limited, is preferably 10 g to 200 g, and more preferably 50 g to 100 g per 1 L of the three-dimensional structure. When the content of alumina per 1 L of the three-dimensional structure is 10 g or more, platinum and palladium can be sufficiently dispersed in the aluminum oxide, and a catalyst having more excellent catalytic performance can be obtained. In contrast, when the content of alumina is 200 g or less, the contact state between platinum and palladium and the exhaust gas is good, and the exhaust gas oxidation performance can be more sufficiently exhibited.

The mixing ratio of the cerium-aluminum composite oxide (particularly CeₓAl_{y}O₂) and alumina is preferably 30 parts by mass or more and 150 parts by mass or less, and more preferably 35 parts by mass or more and 100 parts by mass or less of the cerium-aluminum composite oxide (particularly, CeₓAl_{y}O₂) with respect to 100 parts by mass of the aluminum oxide. With such a mixing ratio, the exhaust gas oxidation performance can be more sufficiently exhibited. Considering the further improvement of the effects of the invention, in addition to the cerium-aluminum composite oxide, the catalyst layer according to the present invention preferably does not substantially contain alumina, and more preferably does not contain alumina (the content of the aluminum oxide in the catalyst layer = 0 mass%). In the present description, "the catalyst layer does not substantially contain the aluminum oxide" means that the content (a supported amount) of aluminum oxide in the catalyst layer is less than 3 mass% and preferably less than 1 mass%.

### [Precious Metal]

The catalyst (catalyst layer) according to the present invention contains platinum (Pt) and palladium (Pd) as precious metal. Considering further improvements of the effects of the invention, the precious metal contained in the catalyst (catalyst layer) according to the present invention is only platinum (Pt) and palladium (Pd).

The supported amount of platinum (Pt) is not particularly limited, is preferably 0.01 g to 20 g, more preferably 0.05 g to 10 g, and most preferably more than 0.5 g and less than 5 g per liter of the three-dimensional structure in terms of precious metal, considering exhaust gas oxidation performance.

The supported amount of palladium (Pd) is not particularly limited, is preferably 0.01 g to 20 g, more preferably 0.05 g to 5 g, and most preferably 0.3 g to 3 g per liter of the three-dimensional structure in terms of precious metal, considering exhaust gas (particularly, HC) oxidation performance.

From the viewpoint of exhaust gas oxidation performance, in the mixing ratio of platinum and palladium, the platinum amount is larger than the palladium amount regarding. Specifically, the content ratio of platinum to palladium (platinum/palladium (mass ratio)) is more than 1.0 and less than 7.0, preferably 2.0 to 5.0, and more preferably more than 2.0 and less than 4.9. When the range of the mixing ratio of platinum and palladium is in the preferred range described above, exhaust gas oxidation performance can be further improved.

The precious metal source (the starting raw material of the precious metal) is not particularly limited, raw materials used in the relevant field such as a water-soluble precious metal salt and a precious metal complex can be used, and these raw materials can be changed and used according to the method for preparing the catalyst.

The amount of the precious metal source is not particularly limited, and is preferably an amount such that the supported amount and the mixing ratio of the noble metals as described above are obtained. When two or more types of noble metal sources are used in combination, the total amount of the noble metal sources is preferably an amount such that the supported amount and the mixing ratio of the noble metals described above are obtained.

### [Other Additional Components]

The catalyst layer according to the present invention may contain other additional components in addition to platinum, palladium, the cerium-aluminum composite oxide or alumina and the cerium-aluminum composite oxide. Specific examples of other additional components include refractory inorganic oxides, alkali metals, alkaline earth metals, rare earth metals, and oxides or sulfides thereof.

When the catalyst layer according to the present invention contains refractory inorganic oxides (excluding the cerium-aluminum composite oxide and alumina), examples of refractory inorganic oxides include zeolites, titania, zirconia, and silica (excluding the cerium-aluminum composite oxide and the aluminum oxide). These refractory inorganic oxides may be used alone as only one type or may be used by combining two or more types thereof.

When the catalyst layer according to the present invention contains alkali metals (excluding the case of containing alumina), examples of alkali metals include lithium, sodium, potassium, rubidium, and cesium, and preferably potassium. The alkali metals may be used alone or may be used in the form of a mixture of two or more types thereof.

When the catalyst layer according to the present invention contains alkaline earth metals (excluding the case of containing alumina), examples of alkaline earth metals include calcium, strontium, and barium, and preferably barium. The alkaline earth metals may be used alone or may be used in the form of a mixture of two or more types thereof. Alternatively, at least one type of alkali metals and at least one type of alkaline earth metals may be combined and used.

When the catalyst layer according to the present invention contains rare earth metals (excluding the case of containing alumina), the rare earth metals are not particularly limited, and examples thereof include lanthanum (La), neodymium (Nd), yttrium (Y), scandium (Sc), and praseodymium (Pr). Among these, lanthanum, neodymium, yttrium, and praseodymium are preferable, and lanthanum and praseodymium are more preferable. These rare earth metals may be contained alone or may be contained by combining two or more types thereof.

In a preferred form of the invention, the catalyst layer contains platinum, palladium, and the cerium-aluminum composite oxide. Alternatively, in a preferred form of the invention, the catalyst layer contains platinum, palladium, the cerium-aluminum composite oxide, and the aluminum oxide. In a more preferred form of the invention, the catalyst layer contains platinum, palladium, and the cerium-aluminum composite oxide.

### [Three-Dimensional Structure]

In the catalyst according to the present invention, platinum, palladium, the cerium-aluminum composite oxide or alumina and the cerium-aluminum composite oxide are supported on a three-dimensional structure (a refractory three-dimensional structure) to form the catalyst layer. In the catalyst layer according to the present invention, one layer may be supported on the three-dimensional structure, or two or more layers may be supported on the three-dimensional structure. In the latter case, the catalyst layers may have the same composition or different compositions. In addition to one or more layers of the catalyst layer according to the present invention, a catalyst layer having a catalyst component other than that according to the present invention may be additionally provided. In that case, the catalyst layer according to the present invention is preferably present on the side in contact with the exhaust gas (the outermost layer).

Here, the three-dimensional structure is not particularly limited, and a refractory three-dimensional structure commonly used in the relevant field can be used in the same manner. Examples of the three-dimensional structure include a heat-resistant carrier such as a honeycomb carrier having triangular, rectangular, or hexagonal shaped through-holes (gas passage port, cell shape). The three-dimensional structure is preferably of an integrally molded type (three-dimensional monolith structure or integrated dam), and for example, a plugged honeycomb carrier having a filter function such as a monolith carrier, a metal honeycomb carrier, and a diesel particulate filter, a perforated metal, or the like is preferably used. It is not necessarily required to be a three-dimensional monolith structure, and for example, a pellet carrier or the like may be used. In addition, spherical or corrugated carriers can be used.

The material of the three-dimensional structure may be any material generally known as a ceramic honeycomb carrier, and in particular, materials such as cordierite, mullite, alumina, α-alumina, silicon carbide, and silicon nitride are preferable. Among these, cordierite-based materials (cordierite carriers) are particularly preferable. In addition, a monolith structure using an oxidation-resistant heat-resistant metal containing stainless steel, a Fe-Cr-Al alloy, or the like is used.

The monolith carrier is produced by an extrusion molding method or a method of winding a sheet-shaped element. The shape of the through hole (gas passage port, cell shape) may be any of a hexagonal shape (honeycomb), a rectangular shape, a triangular shape, and corrugated (corrugated shape). The cell density (number of cells/unit cross-sectional area) of 100 cells/square inch to 1200 cells/square inch is sufficiently usable, preferably 200 cells/square inch to 900 cells/square inch, and more preferably 200 cells/square inch to 600 cells/square inch (1 inch = 25.4 mm).

<Method for Producing the Oxidation Catalyst for Exhaust Gas Purification>

The oxidation catalyst for exhaust gas purification according to the present invention can be produced by appropriately referring to a known method, except that platinum, palladium, the cerium-aluminum composite oxide or the cerium-aluminum composite oxide and alumina, and if necessary, other additional components are used as catalyst components. In one embodiment of the invention, a method for producing an oxidation catalyst for exhaust gas purification of the invention, including ultrasonically treating the aqueous solution containing the cerium source and the aluminum source to produce CeₓAl_{y}O_{z} (where x > y, x + y = 1, and 1.95 ≤ z ≤ 2.05), is provided. In a preferred form of the invention, the method for producing an oxidation catalyst for exhaust gas purification according to the present invention includes (a) a slurry preparation step, (b) a slurry application step, (c) a drying step, and (d) a calcination step. In a more preferred form of the invention, the method for producing an oxidation catalyst for exhaust gas purification of the invention includes ultrasonically treating the aqueous solution containing the cerium source and the aluminum source to produce CeₓAl_{y}O_{z} (where x > y, x + y = 1, and 1.95 ≤ z ≤ 2.05), applying a slurry containing the CeₓAl_{y}O_{z} or containing the CeₓAl_{y}O_{z} and an aluminum oxide, a platinum source, and a palladium source to the three-dimensional structure to form a coated film after drying, and calcining the coated film.

### < Exhaust Gas Oxidation Method >

The catalyst according to the present invention can exhibit high oxidation performance for exhaust gas. Therefore, the invention also provides an exhaust gas oxidation method including treating the exhaust gas by using the oxidation catalyst for exhaust gas purification according to the present invention. In particular, the catalyst according to the present invention can exhibit high oxidation performance for exhaust gas discharged from a diesel engine, and particularly, excellent oxidation performance for nitric oxide (NO) in the exhaust gas. Therefore, in a preferred form of the invention, a diesel engine exhaust gas oxidation method is also provided, which includes treating the exhaust gas (particularly oxidizing nitric oxide (NO) in the exhaust gas) discharged from a diesel engine by using the oxidation catalyst for exhaust gas purification according to the present invention. To measure the purification rate of the exhaust gas from a diesel engine, it is preferable to use an evaluation mode under an exhaust gas regulation such as the light off test with synthetic gas, the NEDC mode, the JC08 mode, the WLTC, the WHTC, the FTP75, the FTP1199, the NRTC, and the NRSC mode. For example, when the evaluation is performed under the NEDC mode, United Nations Economic Commission for Europe, Addendum 82: Regulation No. 83 is followed.

Here, the concentration of NO in the exhaust gas is not particularly limited, is preferably 1 ppm by volume to 10000 ppm by volume, more preferably 10 ppm by volume to 5000 ppm by volume, and still more preferably 20 ppm by volume to 1000 ppm by volume. The treatment can be performed even when HC and CO are contained in the exhaust gas in addition to NO.

In the embodiment described above, the concentration of HC in the exhaust gas is not particularly limited, is preferably 1 ppmC1 by volume to 50000 ppmC1 by volume, more preferably 10 ppmC1 by volume to 10000 ppmC1 by volume, and still more preferably 50 ppmC1 by volume to 1000 ppmC1 by volume. The concentration of CO in the exhaust gas is not particularly limited, is preferably 10 ppm by volume to 50000 ppm by volume, more preferably 50 ppm by volume to 15000 ppm by volume, and still more preferably 50 ppm by volume to 5000 ppm by volume.

The exhaust gas discharged from a diesel engine contains particulate components (particulate matter, PM). Therefore, it is preferable to use a three-dimensional structure having a filter function to remove PM. Alternatively, a filter for removing PM may be separately provided.

The space velocity (SV) of the exhaust gas may be a normal velocity, preferably 1000 hr⁻¹ to 500000 hr⁻¹, and more preferably 5000 hr⁻¹ to 200000 hr⁻¹. The linear gas velocity may be a normal velocity, preferably 0.1 m/sec to 8.5 m/sec, and more preferably 0.2 m/sec to 6.7 m/sec.

The catalyst according to the present invention can maintain and exhibit excellent oxidation performance for low-temperature exhaust gas. Specifically, the catalyst according to the present invention can exhibit excellent exhaust gas oxidation performance for low-temperature exhaust gas at 50°C to 600°C (preferably 300°C or lower, particularly 250°C or lower). Similarly, the catalyst according to the present invention can maintain and exhibit excellent oxidation performance even when exposed to high-temperature exhaust gas for a long time. Specifically, the catalyst according to the present invention can exhibit excellent exhaust gas oxidation performance even for low-temperature exhaust gas of 50°C to 600°C after being exposed to high-temperature exhaust gas of 650°C to 900°C from the internal combustion engine for a long time. Therefore, for example, even when the oxidation catalyst for exhaust gas purification is provided in the exhaust flow passage of the exhaust port of an internal combustion engine (diesel engine) and high-temperature exhaust gas is passed through the exhaust flow passage for a long time, exhaust gas can be efficiently oxidized.

Therefore, the catalyst according to the present invention as described above or the catalyst produced by the method as described above may be exposed to the exhaust gas having a temperature of 650°C to 900°C and preferably 700°C to 850°C. The time for exposing the catalyst according to the present invention to the high-temperature exhaust gas (the time for passing through the exhaust gas) is not particularly limited, and is, for example, 10 hours to 800 hours, preferably 16 hours to 500 hours, and more preferably 40 hours to 100 hours. The catalyst according to the present invention has high performance even after being exposed to such high-temperature exhaust gas. To investigate the exhaust gas oxidation performance of the catalyst after being exposed to such high-temperature exhaust gas, it is effective to evaluate the exhaust gas oxidation performance (resistance to deterioration of the catalyst) after subjecting the catalyst to a treatment of exposing the catalyst to the exhaust gas at 650°C to 900°C for 10 hours to 800 hours as thermal aging.

In the present description, the "temperature of the exhaust gas" means the temperature of the exhaust gas at the catalyst inlet portion. Here, the "catalyst inlet portion" refers to a portion up to 10 cm from the catalyst end surface on an exhaust gas inflow side of the exhaust pipe in which the oxidation catalyst for exhaust gas purification is provided towards the internal combustion engine side, and refers to a location at the center portion of the exhaust pipe in a longitudinal direction (axial direction). In the present description, a "catalyst floor portion" refers to a central portion between the catalyst end surface on the exhaust gas inflow side and the catalyst end surface on the exhaust gas outflow side of the exhaust pipe described above, and refers to a location at the central portion of the cross section of the exhaust pipe (the location at the center of gravity portion of the cross section of the exhaust pipe when the cross section of the exhaust pipe is not circular).

Although embodiments of the invention have been described in detail, it should be understood that these are illustrative and exemplary, not restrictive, and it is obvious that the scope of the invention is to be interpreted by the appended claims.

The invention includes the following aspects and forms.
1. An oxidation catalyst for exhaust gas purification, including a catalyst layer containing platinum, palladium, and a cerium-aluminum composite oxide or a cerium-aluminum composite oxide and an aluminum oxide, formed on a three-dimensional structure, in which
   the cerium-aluminum composite oxide contains CeₓAl_{y}O_{z} (where x > y, x + y = 1, and 1.95 ≤ z ≤ 2.05).
2. The oxidation catalyst for exhaust gas purification according to 1. described above, in which the CeₓAl_{y}O_{z} is Ce_{0.95}Al_{0.05}O_{2.00}.
3. The oxidation catalyst for exhaust gas purification according to 1. described above or 2. described above, in which a peak intensity ratio of CeO₂ to CeₓAl_{y}O_{z} in an X-ray diffraction pattern is less than 5.00.
4. The oxidation catalyst for exhaust gas purification according to any of 1. described above to 3. described above, in which the catalyst layer contains platinum, palladium, and the cerium-aluminum composite oxide.
5. The oxidation catalyst for exhaust gas purification according to any of 1. described above to 3. described above, in which the catalyst layer contains platinum, palladium, the cerium-aluminum composite oxide, and the aluminum oxide.
6. The oxidation catalyst for exhaust gas purification according to any one 1. described above to 5. described above, in which a content ratio (mass ratio) of the platinum to the palladium is more than 1.0 and less than 7.0.
7. The oxidation catalyst for exhaust gas purification according to any of 1. described above to 6. described above, which is a catalyst for oxidizing an exhaust gas discharged from a diesel engine.
8. A method for producing CeₓAl_{y}O_{z} (where x > y, x + y = 1, and 1.95 ≤ z ≤ 2.05), the method including: ultrasonically treating an aqueous solution containing a cerium source and an aluminum source.
9. A method for producing the oxidation catalyst for exhaust gas purification according to any of 1. described above to 7. described above, the method including: ultrasonically treating an aqueous solution containing a cerium source and an aluminum source to produce CeₓAl_{y}O_{z} (where x > y, x + y = 1, and 1.95 ≤ z ≤ 2.05).
10. A method for producing the oxidation catalyst for exhaust gas purification according to any of 1. described above to 7. described above, the method including: ultrasonically treating the aqueous solution containing the cerium source and the aluminum source to produce CeₓAl_{y}O_{z} (where x > y, x + y = 1, and 1.95 ≤ z ≤ 2.05), applying a slurry containing the CeₓAl_{y}O_{z} or containing the CeₓAl_{y}O_{z} and an aluminum oxide, a platinum source, and a palladium source to the three-dimensional structure to form a coated film after drying, and calcining the coated film.
11. An exhaust gas (particularly NO) oxidation method including: treating an exhaust gas by using the oxidation catalyst for exhaust gas purification according to any of 1. described above to 7. described above.

### Examples

The effects of the invention will be described using the following Examples and Comparative Examples. However, the technical scope of the invention is not limited to only the following Examples. In the following Examples, operations were performed at room temperature (25°C) unless otherwise specified. "%" and "part" mean "mass%" and "parts by mass", respectively unless otherwise specified.

### Production Example 1: Preparation of Powder a

CeCl₃·7H₂O as a Ce raw material 1 and AlCl₃·6H₂O as an Al raw material 1 were weighed such that the mixing ratio of CeO₂ and Al₂O₃ was 5:95 (mass ratio). The weighed Ce raw material 1 and Al raw material 1 were added to a 0.1 mol/L HCl aqueous solution such that the total concentration of the Ce raw material 1 and the Al raw material 1 was 20 mass%, and the Ce/Al mixed liquid 1 was prepared.

An ultrasonic treatment device (1510J-DTH, Emerson Japan Co., Ltd.) was filled with 200 mL of the Ce/Al mixed liquid 1. While the temperature of the Ce/Al mixed solution 1 was maintained at 40°C, ultrasonic treatment was performed for 0.5 hours while applying an energy of 70 W/cm² at a frequency of 42 kHz (ultrasonic treatment solution). The obtained ultrasonic treatment solution was added dropwise to 200 mL of a 0.1 mol/L NH₄OH aqueous solution, followed by filtration to obtain a pale yellow powder. The amount of the Ce/Al mixed liquid 1 added to the NH₄OH aqueous solution was in an amount such that the total concentration of the Ce raw material 1 and the Al raw material 1 was 10 mass%.

The obtained powder was washed with distilled water multiple times, dried at 100°C for 48 hours, and then calcined at 650°C for 30 minutes to obtain the powder a (CeO₂ content = 5 mass%).

### Production Example 2: Preparation of Powder b

Powder b (CeO₂ content = 10 mass%) was obtained in the same manner as in Production Example 1 except that the Ce raw material 1 and the Al raw material 1 were weighed such that the mixing ratio of CeO₂ and Al₂O₃ was 10:90 (mass ratio).

### Production Example 3: Preparation of Powder c

Powder c (CeO₂ content = 20 mass%) was obtained in the same manner as in Production Example 1 except that the Ce raw material 1 and the Al raw material 1 were weighed such that the mixing ratio of CeO₂ and Al₂O₃ was 20:80 (mass ratio).

### Production Example 4: Preparation of Powder d

Powder d (CeO₂ content = 5 mass%) was obtained in the same manner as in Production Example 1 except that an ultrasonic treatment was not performed.

### Example 1: Preparation of Catalyst A

Platinum nitrate as a Pt raw material, palladium nitrate as a Pd raw material, and the powder a prepared in Production Example 1 were weighed so as to have the ratio in Table 1. Nitric acid was added to pure water to have a pH of 1.5, and then the powder a was added thereto, followed by being stirred for 30 minutes. Next, wet-milling was performed for 14 hours at a rotation velocity of 60 revolutions/min using a wet mill (ball mill), and then platinum nitrate and palladium nitrate were dropped in this order while stirring the slurry to obtain the slurry A1 (solid concentration = 32 mass%). The average particle size (D50) of catalyst components in the obtained slurry A1 was 5 µm or less.

The obtained slurry A1 was washcoated onto a cordierite carrier (diameter = 24 mm, length = 67 mm, 300 cells/square inch, and 5 mils) to have the supported amount of 111.44 g/L after calcination. Then, after drying at 150°C for 15 minutes, the catalyst A was obtained by calcination at 550°C for 30 minutes.

### Example 2: Preparation of Catalyst B

Catalyst B was obtained in the same manner as in Example 1 except that the powder b prepared in Production Example 2 was used instead of the powder a.

### Example 3: Preparation of Catalyst C

Catalyst C was obtained in the same manner as in Example 1 except that the powder c prepared in Production Example 3 was used instead of the powder a.

### Comparative Example 1: Preparation of Catalyst D

Platinum nitrate as a Pt raw material, palladium nitrate as a Pd raw material, alumina (BET specific surface area: 215 m²/g, average secondary particle size: 15 µm), and ceria (BET specific surface area: 152 m²/g, average secondary particle size: 4 µm) were weighed so as to have the ratio in Table 1. Nitric acid was added to pure water to have a pH of 1.5, and then alumina and ceria were added in this order, followed by being stirred for 30 minutes. Next, wet-milling was performed for 14 hours at a rotation velocity of 60 revolutions/min using a wet mill (ball mill), and then platinum nitrate and palladium nitrate were dropped in this order while stirring the slurry to obtain the slurry D1 (solid concentration = 32 mass%). The average particle size (D50) of catalyst components in the obtained slurry D1 was 5 µm or less.

A catalyst D was obtained in the same manner as in Example 1 except that the slurry D1, prepared as described above, was used instead of the slurry A1.

### Examples 4 and 5: Preparation of Catalyst E and Catalyst F

Platinum nitrate as a Pt raw material, palladium nitrate as a Pd raw material, the powder b prepared in Production Example 2, and alumina (BET specific surface area: 215 m²/g, average secondary particle size: 15 µm) were weighed so as to have the ratios in Table 1, respectively. Nitric acid was added to pure water to have a pH of 1.5, and then the powder b and alumina were added in this order, followed by being stirred for 30 minutes. Next, wet-milling was performed for 14 hours at a rotation velocity of 60 revolutions/min using a wet mill (ball mill), and then platinum nitrate and palladium nitrate were dropped in this order while stirring the slurries to obtain the slurry E1 (solid concentration = 32 mass%) and the slurry F1 (solid concentration = 32 mass%). The average particle size (D50) of catalyst components in the obtained slurries E1 and F1 was 5 µm or less.

Catalysts E and F were obtained in the same manner as in Example 1 except that the slurries E1 and F1, prepared as described above, were used instead of the slurry A1.

### Comparative Example 2: Preparation of Catalyst G

Platinum nitrate as a Pt raw material, palladium nitrate as a Pd raw material, and alumina (BET specific surface area: 215 m²/g, average secondary particle size: 15 µm) were weighed so as to have the ratio in Table 1. Nitric acid was added to pure water to have a pH of 1.5, and then alumina was added thereto, followed by being stirred for 30 minutes. Next, wet-milling was performed for 14 hours at a rotation velocity of 60 revolutions/min using a wet mill (ball mill), and then platinum nitrate and palladium nitrate were dropped in this order while stirring the slurry to obtain the slurry G1 (solid concentration = 32 mass%). The average particle size (D50) of catalyst components in the obtained slurry G1 was 5 µm or less.

Catalyst G was obtained in the same manner as in Example 1 except that the slurry G1, prepared as described above, was used instead of the slurry A1.

### Comparative Example 3: Preparation of Catalyst H

Platinum nitrate as a Pt raw material, palladium nitrate as a Pd raw material, and alumina (BET specific surface area: 215 m²/g, average secondary particle size: 15 µm) were weighed so as to have the ratio in Table 1. Nitric acid was added to pure water to have a pH of 1.5, and then alumina was added thereto, followed by being stirred for 30 minutes. Next, wet-milling was performed for 14 hours at a rotation velocity of 60 revolutions/min using a wet mill (ball mill), and then platinum nitrate and palladium nitrate were dropped in this order while stirring the slurry to obtain the slurry H1 (solid concentration = 32 mass%). The average particle size (D50) of catalyst components in the obtained slurry H1 was 5 µm or less.

The catalyst H was obtained in the same manner as in Example 1 except that the slurry H1, prepared as described above, was used instead of the slurry A1, and the slurry H1 was washcoated so as to have a supported amount of 111.76 g/L on a cordierite carrier after calcination.

### Example 6: Preparation of Catalyst I

Platinum nitrate as a Pt raw material, palladium nitrate as a Pd raw material, and the powder a prepared in Production Example 1 were weighed so as to have the ratio in Table 1. Nitric acid was added to pure water to have a pH of 1.5, and then the powder a was added thereto, followed by being stirred for 30 minutes. Next, wet-milling was performed for 14 hours at a rotation velocity of 60 revolutions/min using a wet mill (ball mill), and then platinum nitrate and palladium nitrate were dropped in this order while stirring the slurry to obtain the slurry I1 (solid concentration = 32 mass%). The average particle size (D50) of catalyst components in the obtained slurry I1 was 5 µm or less.

Catalyst I was obtained in the same manner as in Example 1 except that the slurry I1, prepared as described above, was used instead of the slurry A1, and the slurry I1 was washcoated so as to have a supported amount of 111.76 g/L on a cordierite carrier after calcination.

### Comparative Example 4: Preparation of Catalyst J

Platinum nitrate as a Pt raw material, palladium nitrate as a Pd raw material, and alumina (BET specific surface area: 215 m²/g, average secondary particle size: 15 µm) were weighed so as to have the ratio in Table 1. Nitric acid was added to pure water to have a pH of 1.5, and then alumina was added thereto, followed by being stirred for 30 minutes. Next, wet-milling was performed for 14 hours at a rotation velocity of 60 revolutions/min using a wet mill (ball mill), and then platinum nitrate and palladium nitrate were dropped in this order while stirring the slurry to obtain the slurry J1 (solid concentration = 32 mass%). The average particle size (D50) of catalyst components in the obtained slurry J1 was 5 µm or less.

Catalyst J was obtained in the same manner as in Example 1 except that the slurry J1, prepared as described above, was used instead of the slurry A1.

### Example 7: Preparation of Catalyst K

Platinum nitrate as a Pt raw material, palladium nitrate as a Pd raw material, and the powder b prepared in Production Example 2 were weighed so as to have the ratio in Table 1. Nitric acid was added to pure water to have a pH of 1.5, and then the powder b was added thereto, followed by being stirred for 30 minutes. Next, wet-milling was performed for 14 hours at a rotation velocity of 60 revolutions/min using a wet mill (ball mill), and then platinum nitrate and palladium nitrate were dropped in this order while stirring the slurry to obtain the slurry K1 (solid concentration = 32 mass%). The average particle size (D50) of catalyst components in the obtained slurry K1 was 5 µm or less.

Catalyst K was obtained in the same manner as in Example 1 except that the slurry K1, prepared as described above, was used instead of the slurry A1.

### Comparative Example 5: Preparation of Catalyst L

Catalyst L was obtained in the same manner as in Example 1 except that the powder d, prepared in Production Example 4, was used instead of the powder a.

Compositions of the catalysts A to L obtained as described above are summarized in Table 1 below. In Table 1 below, "Pt" and "Pd" represent the supported amounts (in terms of precious metal) (g/L) of platinum and palladium, respectively. In Table 1 below, "Al₂O₃" and "CeO₂" represent the supported amounts (in terms of oxide) (g/L) of alumina and ceria, respectively. The "Ce-Al complex" represents the cerium-aluminum composite oxide. "AlCe" represents the supported amount (g/L) of the cerium-aluminum composite oxide (in terms of oxide), and "Al₂O₃ amount in Ce-Al complex" and "CeO₂ amount in Ce-Al complex" represent the amount (g/L) of Al₂O₃ (in terms of oxide) and the amount (g/L) of CeO₂ (in terms of oxide) in the cerium-aluminum composite oxide, respectively. The "content rate of Ce-Al complex with respect to total supported amount" represents the proportion (mass%) of the cerium-aluminum composite oxide contained in the catalyst.

**[Table 1]**

| | Catalyst | Pt (g/L) | Pd (g/L) | AlCe (g/L) | Al₂O₃ (g/L) | CeO₂ (g/L) | Total supported amount (g/L) | Pt/Pd ratio | Used powder | Al₂O₃ amount (g/L) in Ce-Al complex | CeO₂ amount (g/L) in Ce-Al complex | Content rate (%) of Ce-Al complex with respect to total supported amount |
|---|---|---|---|---|---|---|---|---|---|---|---|---|
| Example 1 | A | 1,08 | 0,36 | 110 | 0 | 0 | 111,44 | 3,0 | a | 104,5 | 5,5 | 98,7 |
| Example 2 | B | 1,08 | 0,36 | 110 | 0 | 0 | 111,44 | 3,0 | b | 99 | 11 | 98,7 |
| Example 3 | C | 1,08 | 0,36 | 110 | 0 | 0 | 111,44 | 3,0 | c | 88 | 22 | 98,7 |
| Comparative Example 1 | D | 1,08 | 0,36 | 0 | 99 | 11 | 111,44 | 3,0 | - | 0 | 0 | 0,0 |
| Example 4 | E | 1,08 | 0,36 | 55 | 55 | 0 | 111,44 | 3,0 | b | 49,5 | 5,5 | 49,4 |
| Example 5 | F | 1,08 | 0,36 | 27,5 | 82,5 | 0 | 111,44 | 3,0 | b | 24,75 | 2,75 | 24,7 |
| Comparative Example 2 | G | 1,08 | 0,36 | 0 | 110 | 0 | 111,44 | 3,0 | - | 0 | 0 | 0,0 |
| Comparative Example 3 | H | 1,46 | 0,30 | 0 | 110 | 0 | 111,76 | 4,9 | - | 0 | 0 | 0,0 |
| Example 6 | I | 1,46 | 0,30 | 110 | 0 | 0 | 111,76 | 4,9 | a | 104,5 | 5,5 | 98,4 |
| Comparative Example 4 | J | 0,96 | 0,48 | 0 | 110 | 0 | 111,44 | 2,0 | - | 0 | 0 | 0,0 |
| Example 7 | K | 0,96 | 0,48 | 110 | 0 | 0 | 111,44 | 2,0 | b | 99 | 11 | 98,7 |
| Comparative Example 5 | L | 1,08 | 0,36 | 110 | 0 | 0 | 111,44 | 3,0 | d | 104,5 | 5,5 | 98,7 |

In the catalysts A to F, I, K, and L obtained as described above, the presence of Ce_{0.95}Al_{0.05}O_{2.00} was verified, and the peak intensity ratio of CeO₂ to Ce_{0.95}Al_{0.05}O_{2.00} was measured as follows. Results are shown in Table 2 below.

### -Confirmation of Ce_{0.95}Al_{0.05}O_{2.00} and Measurement of Peak Intensity Ratio of CeO₂ to Ce_{0.95}Al_{0.05}O_{2.00}-

Each catalyst is subjected to X-ray diffraction (XRD) under the following conditions to obtain an XRD pattern.

### (X-ray Diffraction Conditions)

X-ray diffraction measurement device: X'Pert PRO manufactured by Spectris
Radiation source: CuKα ray
Measurement angle range (2θ): 25° to 89°
Step interval: 0.013°
Scanning velocity: 1.2°/min
Operation voltage: 45 kV
Operation current: 40 mA.

In the obtained XRD pattern, the intensity (peak intensity I_{A}) of a peak observed in the range of 2θ values of 77.0° or more and less than 78.0° and an intensity (peak intensity I_{B}) of a peak observed in the range of 2θ values of 76.0° or more and less than 77.0° were measured. Here, the peak containing Ce and Al observed in the range of 2θ values of 77.0° or more and less than 78.0° is the peak specific to Ce_{0.95}Al_{0.05}O_{2.00}. Therefore, when a peak is observed in the range of 2θ values of 77.0° or more and less than 78.0°, it is determined that Ce_{0.95}Al_{0.05}O_{2.00} is present. Similarly, the peak observed in the range of 2θ values of 76.0° or more and less than 77.0° is the peak specific to ceria (CeO₂). Therefore, when a peak is observed in the range of the 2θ values of 76.0° or more and less than 77.0°, it is determined that ceria (CeO₂) is present. When the peak is not detected in an identification search of the XRD pattern, it is determined that there is no peak, and "-" is shown in the following Table 2.

Next, the value (I_{B}/I_{A} ratio) is calculated by dividing the described above peak intensity I_{B} by the peak intensity I_{A}. The "I_{B}/I_{A} ratio" is the peak intensity ratio of CeO₂ to Ce_{0.95}Al_{0.05}O_{2.00}. When cerium-aluminum composite oxides containing CeO₂ and Al₂ O₃ in equivalent amounts are compared, the smaller the I_{B}/I_{A} ratio is, the larger the proportion of Ce_{0.95}Al_{0.05}O_{2.00} present in the cerium-aluminum composite oxide is.

The catalysts A to L obtained as described above were evaluated for NO oxidation performance as follows. Specifically, a mixed gas (NO: 300 ppm by volume, NO₂: 0 ppm by volume, O₂: 10 vol%, CO: 300 ppm by volume, HC (C₃H₆ only): 300 ppmC1 by volume, CO₂: 6 vol%, H₂O: 6 vol%, remainder: N₂) was passed through each catalyst (0.0303 L) at a flow rate of GHSV: 40000h⁻¹ while being heated at a rate of 20°C/min from an inlet temperature of the catalyst of 100°C to 400°C, and the concentration of NO₂ contained in the generated gas passing through the catalyst at 250°C and 300°C was measured to measure the NO₂ generation rate (%) of each catalyst. Results are shown in Table 2 below. Further, the respective purification rates of CO and HC were calculated at the same time. The temperature at which the purification rate of each gas reaches 50% was defined as T₅₀ (°C), and results are shown in Table 2 below. It is noted that the lower the T₅₀, the more easily each gas is oxidized (the higher the catalytic performance).

**[Table 2]**

| | Catalyst | Peak intensity ratio (I_{B}/I_{A} ratio) of CeO₂ to Ce_{0.95}Al_{0.05}O_{2.00} | NO₂ generation rate (%) | | T₅₀ (°C) | |
|---|---|---|---|---|---|---|
| | | | 250°C | 300°C | CO | HC |
| Example 1 | A | 1,66 | 49,6 | 63,3 | 176 | 192 |
| Example 2 | B | 1,71 | 44,6 | 59,6 | 178 | 195 |
| Example 3 | C | 4,21 | 39,8 | 56,6 | 184 | 201 |
| Comparative Example 1 | D | - | 32,4 | 49,7 | 194 | 216 |
| Example 4 | E | 1,85 | 43,5 | 54,8 | 154 | 172 |
| Example 5 | F | 1,95 | 42,8 | 53,3 | 157 | 176 |
| Comparative Example 2 | G | - | 30,8 | 45,6 | 192 | 208 |
| Comparative Example 3 | H | - | 40,2 | 55,0 | 181 | 195 |
| Example 6 | I | 2,12 | 43,3 | 58,5 | 184 | 198 |
| Comparative Example 4 | J | - | 39,8 | 53,1 | 153 | 170 |
| Example 7 | K | 3,77 | 42,3 | 55,1 | 168 | 183 |
| Comparative Example 5 | L | 5,63 | 36,3 | 53,1 | 193 | 213 |

From Table 2 described above, it can be seen that catalysts A to C, E, F, I, and K of Examples show significantly higher NO₂ generation rates than those catalysts D, G, H, J, and L of Comparative Examples 1 to 5.

The present application is based on Japanese Patent Application No. 2022-109527, filed on July 7, 2022, the disclosure of which is incorporated by reference in its entirety.

## Claims

1. An oxidation catalyst for exhaust gas purification, comprising:
a catalyst layer containing platinum, palladium, and a cerium-aluminum composite oxide or a cerium-aluminum composite oxide and an aluminum oxide, formed on a three-dimensional structure, wherein
the cerium-aluminum composite oxide contains CeₓAl_{y}O_{z} (where x > y, x + y = 1, and 1.95 ≤ z ≤ 2.05).

2. The oxidation catalyst for exhaust gas purification according to claim 1, wherein the CeₓAl_{y}O_{z} is Ce_{0.95}Al_{0.05}O_{2.00}.

3. The oxidation catalyst for exhaust gas purification according to claim 1 or 2, wherein a peak intensity ratio of CeO₂ to CeₓAl_{y}O_{z} in an X-ray diffraction pattern is less than 5.00.

4. The oxidation catalyst for exhaust gas purification according to claim 1 or 2, wherein the catalyst layer contains platinum, palladium, and the cerium-aluminum composite oxide.

5. The oxidation catalyst for exhaust gas purification according to claim 1 or 2, wherein the catalyst layer contains platinum, palladium, the cerium-aluminum composite oxide, and the aluminum oxide.

6. The oxidation catalyst for exhaust gas purification according to claim 1 or 2, wherein a content ratio (mass ratio) of the platinum to the palladium is more than 1.0 and less than 7.0.

7. The oxidation catalyst for exhaust gas purification according to claim 1 or 2, which is a catalyst for oxidizing an exhaust gas discharged from a diesel engine.

8. A method for producing CeₓAl_{y}O_{z} (where x > y, x + y = 1, and 1.95 ≤ z ≤ 2.05), the method comprising:
ultrasonically treating an aqueous solution containing a cerium source and an aluminum source.

9. A method for producing the oxidation catalyst for exhaust gas purification according to claim 1 or 2, the method comprising:
ultrasonically treating an aqueous solution containing a cerium source and an aluminum source to produce CeₓAl_{y}O_{z} (where x > y, x + y = 1, and 1.95 ≤ z ≤ 2.05).

10. An exhaust gas oxidation method comprising:
treating an exhaust gas by using the oxidation catalyst for exhaust gas purification according to claim 1 or 2.
